# EUROPEAN PATENT APPLICATION

(11) **EP 4 793 660 A1**
(43) Date of publication of application: **19.08.2026**
(21) Application number: 24877104.0
(22) Date of filing: 03.10.2024
(51) Int. Cl.: G01S 7/497, G01C 15/06, G01S 7/481

(54) **MARKER AND LIDAR SYSTEM**

(30) Priority: 10.10.2023 JP 2023175444
(71) Applicant: Koito Manufacturing Co., Ltd., Shinagawa-ku, Tokyo 141-0001 (JP)
(72) Inventor: KUBONIWA Takuya, Shizuoka-shi, Shizuoka 424-8764 (JP)
(74) Representative: Hoffmann Eitle
(86) International application number: PCT/JP2024/035508
(87) International publication number: WO 2025/079508

(57) **Abstract**

A marker (10) detectable by a plurality of LiDAR devices (20) includes: a pole portion (11); and a reflecting portion (12) provided at one end of the pole portion (11) and having a plurality of reflective regions having different reflectances for reflecting light emitted from the respective LiDAR devices (20) toward the

## Description

### Technical Field

The present invention relates to a marker and a LiDAR system.

### Background Art

A light detection and ranging (LiDAR) device that detects an object is known. In this case, Patent Literature 1 below discloses a LiDAR system that detects an object using two LiDAR devices with each LiDAR device. In this LiDAR system, the detection regions of the respective LiDAR devices partially overlap each other, and a marker located in this overlapping region is detected. Specifically, this LiDAR system integrates pieces of point cloud data with each other with reference to coordinates of the marker measured by the respective LiDAR devices. As a result, a decrease in the object detection accuracy can be suppressed as compared with a case where the marker is not used. Examples of such a marker include a tile.

[Patent Literature 1] JP 2023-118608 A

### Summary of Invention

In a case where a portion reflecting the laser light from the LiDAR device is disposed along the ground or the floor as in the LiDAR system described above, the portion is not irradiated with the laser light due to an obstacle, and it may be difficult to detect the marker.

Therefore, an object of the present invention is to provide a marker easily detected by a LiDAR device, and a LiDAR system.

In order to achieve the above object, the present invention provides a marker detectable by a plurality of LiDAR devices, the marker including: a pole portion; and a reflecting portion provided at one end of the pole portion and having a plurality of reflective regions having different reflectances for reflecting light emitted from the respective LiDAR devices toward the corresponding LiDAR devices.

Furthermore, the present invention provides a LiDAR system including: at least two LiDAR devices having respective detection regions partially overlapping each other; a marker disposed in an overlapping region in which the respective detection regions overlap each other; and a processor that integrates pieces of point cloud data output from the respective LiDAR devices with reference to a plurality of pieces of point data indicating the marker, wherein the marker includes a pole portion and a reflecting portion provided at one end of the pole portion and having a plurality of reflective regions having different reflectances for reflecting light emitted from the respective LiDAR devices toward the corresponding LiDAR devices, and the plurality of pieces of point data are data based on the light reflected by the at least two reflective regions.

As described above, since the marker includes the pole portion and the reflecting portion is provided at one end of the pole portion, by installing the marker so as to erect the pole portion, it is possible to suppress the irradiation of the plurality of reflective regions with the laser light from the LiDAR devices from being obstructed by an obstacle disposed on the ground or the floor as compared with a case where the reflective regions are disposed along the ground or the floor. Therefore, the marker of the present invention is easily detected by the LiDAR device. Furthermore, since the reflecting portion has the above-described plurality of reflective regions having different reflectances, the light reflected by the reflective regions having different reflectances is incident on the LiDAR device as light having different intensities. Therefore, the LiDAR device can generate data related to the position and orientation of the marker on the basis of the intensity profile of the incident light. The plurality of LiDAR devices create pieces of data related to a common marker, so that, on the basis of the data, the pieces of point cloud data respectively output from the plurality of LiDAR devices can be integrated. That is, the marker of the present invention can be a marker serving as a reference when the pieces of point cloud data of the plurality of LiDAR devices are integrated.

It is preferable that the reflecting portion include at least three types of reflective regions having the reflectances different from each other.

In this case, the reflecting portion can have more various reflectance profiles than the reflecting portion having reflective regions of the two types of reflectances, and the LiDAR device can generate data related to a more accurate orientation of the marker.

It is preferable that a size of the reflecting portion along a radial direction of the pole portion be larger than a size of the pole portion along the radial direction.

In this case, since the reflecting portion can be made larger than the area of the ground or the like on which the pole portion is installed, the number of pieces of point data indicating the marker generated by the LiDAR device can be increased. Therefore, even when the installation area of the marker is small, it is possible to generate accurate data related to the marker.

The profile of the reflective regions of the reflecting portion is preferably rotationally asymmetric.

In this case, the intensity profile of the light reflected by the reflecting portion becomes unique regardless of the direction in which the LiDAR device is installed with respect to the marker, and the relative positional relationship between the marker and the LiDAR device is uniquely determined. Therefore, the load of the processor that integrates the pieces of point cloud data can be reduced.

It is preferable that the reflecting portion have a shape having a plurality of planar lateral surfaces non-parallel to a radial direction of the pole portion, and that the lateral surfaces adjacent to each other be reflective regions having the reflectances different from each other.

Since the reflective regions are flat surfaces, a change in reflectance in the reflective regions can be suppressed, and the adjacent reflective regions are directed differently, so that the LiDAR devices can easily specify the positions of the lateral surfaces that are the reflective regions for the respective LiDAR devices. Therefore, more accurate data related to the marker can be generated.

A surface direction of each of the planar lateral surfaces may be along the radial direction.

In this case, the pole portion is erected, so that the surface direction of each of the planar lateral surfaces is horizontal. In this case, for example, in a case where the distance between the LiDAR device and the marker is large, the entrance angle of the laser light from the LiDAR device to the lateral surface can be reduced. Therefore, the reflectance of the laser light can be increased, and more accurate data related to the marker can be generated.

It is preferable that a surface direction of each of the planar lateral surfaces be directed toward the one end of the pole portion from the other end of the pole portion rather than the radial direction.

In this case, the pole portion is erected, so that the surface direction of each of the planar lateral surfaces is directed upward relative to the horizontal direction. The LiDAR devices may be provided at high positions. For example, the LiDAR device used for infrastructure facilities in a town or the like is generally provided at a high position. As in the above, when the surface direction of the lateral surface is directed upward relative to the horizontal direction, the lateral surface can be directed to the LiDAR side. Therefore, the above-described reflectance of the laser light from the LiDAR device can be increased.

The number of the planar lateral surfaces may be six.

If the number of planar surfaces is six, light reflected by the three lateral surfaces can be incident on the LiDAR device. Therefore, the LiDAR device can easily specify the positions of the three lateral surfaces, and can generate more accurate data related to the marker as compared with a case where the number of planar surfaces is smaller than six.

A surface of the reflecting portion on an opposite side to a side of the pole portion may be planar, and the plurality of reflective regions may be provided on the planar surface.

In this case, the pole portion is erected, so that the planar surface on which the plurality of reflective regions are provided becomes the upper surface of the reflecting portion. As described above, the LiDAR devices may be provided at high positions. Therefore, by providing the reflective regions on the upper surface, the laser light from the LiDAR device can be easily irradiated.

As described above, according to the present invention, a marker and a LiDAR system that are easily detected by LiDAR devices can be provided.

### Brief Description of Drawings

[FIG. 1] FIG. 1 is a schematic diagram of an object detection system according to an embodiment of the present invention.
[FIG. 2] FIG. 2 is a schematic diagram of a marker.
[FIG. 3] FIG. 3 is a diagram of a first modification of the marker as viewed from above.
[FIG. 4] FIG. 4 is a diagram of a second modification of the marker as viewed from above.
[FIG. 5] FIG. 5 is a schematic diagram of a LiDAR device.
[FIG. 6] FIG. 6 is a flowchart illustrating an operation of a processor 30.
[FIG. 7] FIG. 7 is a schematic diagram of a third modification of the marker.

### Description of Embodiments

Hereinafter, preferred embodiments of a marker and a LiDAR system according to the present invention will be described in detail with reference to the drawings. The embodiments exemplified below are intended to facilitate understanding of the present invention and are not intended to limit interpretation of the present invention. The present invention can be modified and improved within the scope of the claims. In addition, in the present invention, constituent elements in the following exemplary embodiments may be appropriately combined. In the drawings referred to below, dimensions of each member may be changed for easy understanding. In addition, in the drawings, for the sake of clarity, only some of similar components are denoted by reference numerals, and reference numerals may be omitted for some other similar components.

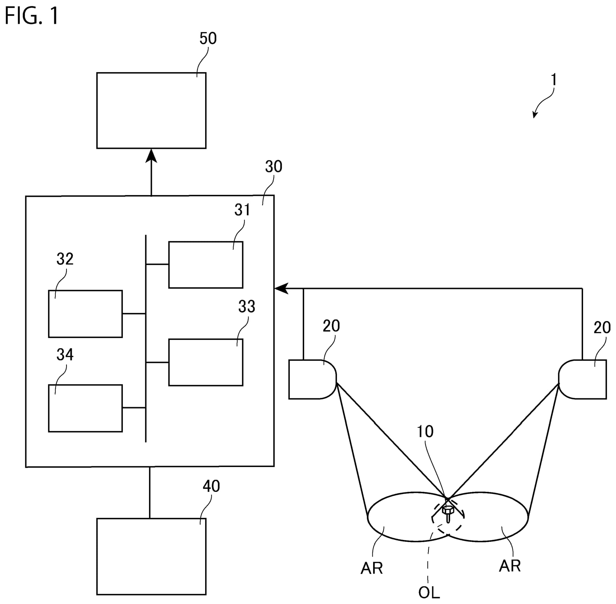

FIG. 1 is a schematic diagram of a LiDAR system according to the present embodiment. The LiDAR system 1 of the present embodiment includes a marker 10, a plurality of LiDAR devices 20, and a processor 30 as main components.

The respective LiDAR devices 20 are individually installed, for example, on a support near the road. In addition, the respective LiDAR devices 20 are installed so that their positions and orientations are different from each other and respective detection regions AR partially overlap each other. The LiDAR device 20 emits laser light to the detection region AR and detects light reflected by the laser light to detect an object located in the detection region AR. In FIG. 1, a region where the detection regions AR of the respective LiDAR devices 20 overlap each other is illustrated as an overlapping region OL. In the overlapping region OL, the marker 10 is installed.

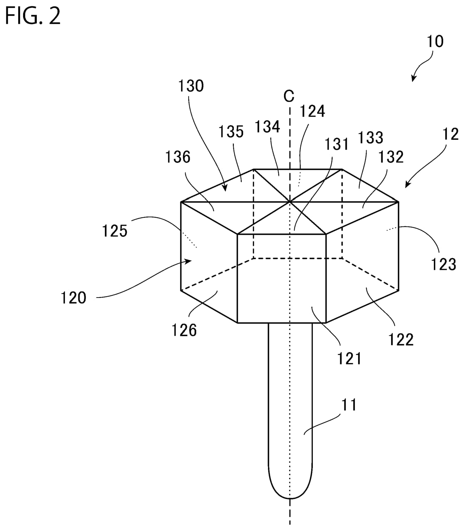

FIG. 2 is a conceptual diagram of the marker 10. As illustrated in FIG. 2, the marker 10 includes a pole portion 11 and a reflecting portion 12 as main components.

The pole portion 11 has a columnar shape, and is, for example, a portion installed such that the longitudinal direction thereof corresponds to the vertical direction. The pole portion 11 has, for example, a diameter of 10 cm or more and 20 cm or less and a length of 1 m or more and 2 m or less. In addition, the shape of the cross section perpendicular to the longitudinal direction is, for example, a circle or a polygon. The reflecting portion 12 is provided at one end of the pole portion 11. Although not particularly illustrated, for example, the pole portion 11 has a sharp shape at the other end on the opposite side to the reflecting portion 12 side, and is installed on the ground contact surface by piercing the ground contact surface, or is installed on the ground contact surface by providing legs extending outside the pole portion 11 at the other end.

As described above, the reflecting portion 12 provided at one end of the pole portion 11 has a substantially hexagonal columnar shape in the present embodiment. In this example, the reflecting portion 12 has a rotationally symmetric shape, specifically, a rotationally symmetric shape with respect to a central axis C of the pole portion 11. Therefore, respective lateral surfaces 120 of the reflecting portion 12 are planar, and an upper surface 130, which is a surface on the opposite side to the pole portion 11 side, is also planar. In order to avoid complication of the drawing, only one lateral surface 120 is denoted in FIG. 2. The reflecting portion 12 is provided at one end of the pole portion 11 such that the surface direction of each lateral surface 120 is perpendicular to the longitudinal direction of the pole portion 11. Therefore, the lateral surfaces 120 of the reflecting portion 12 of the present embodiment are not parallel to the radial direction of the pole portion 11. Therefore, a line passing through the lateral surface 120 and along the surface direction of the lateral surface 120 can intersect the pole portion 11. When the pole portion 11 is installed such that the longitudinal direction thereof corresponds to the vertical direction as described above, the surface direction of each of the lateral surfaces 120 corresponds to the horizontal direction. Since the surface direction of each of the lateral surfaces 120 corresponds to the horizontal direction, the entrance angle of the laser light emitted from the LiDAR device 20 to the lateral surface 120 can be reduced as described later, for example, in a case where the distance between the LiDAR device 20 and the marker 10 is large. In addition, the size of the reflecting portion 12 in the radial direction of the pole portion 11 is larger than the size of the pole portion 11 in the radial direction. Therefore, in a case where the pole portion 11 is installed such that the longitudinal direction thereof corresponds to the vertical direction, the size of the reflecting portion 12 in the horizontal direction is larger than the size of the pole portion 11 in the horizontal direction. Therefore, since the reflecting portion 12 can be made larger than the area of the ground or the like on which the pole portion 11 is installed, the number of pieces of point data can be increased in a case where the LiDAR device 20 generates a plurality of pieces of point data indicating the marker.

The reflecting portion 12 has a plurality of reflective lateral surface regions 121 to 126 and reflective upper surface regions 131 to 136 having different reflectances for reflecting light emitted from the respective LiDAR devices 20 toward the corresponding LiDAR devices. The reflective lateral surface regions 121 to 126 are respectively provided on the lateral surfaces 120 of a hexagonal column in the order of the reflective lateral surface regions 121 to 126. The reflective upper surface regions 131 to 136 are provided on the upper surface 130 of the hexagonal column. In the present embodiment, the reflective upper surface regions 131 to 136 are the upper surface 130 divided into regions by straight lines drawn from the center of the upper surface 130 to the respective apexes of the upper surface 130, and the reflective upper surface regions 131 to 136 are provided in the respective divided regions in this order. The reflective lateral surface region 121 and the reflective upper surface region 131 are adjacent to each other with an edge between the lateral surface 120 and the upper surface 130 interposed therebetween. Similarly, the reflective lateral surface region 122 and the reflective upper surface region 132, the reflective lateral surface region 123 and the reflective upper surface region 133, the reflective lateral surface region 124 and the reflective upper surface region 134, the reflective lateral surface region 125 and the reflective upper surface region 135, and the reflective lateral surface region 126 and the reflective upper surface region 136 are adjacent to each other with the respective edges between the lateral surface 120 and the upper surface 130 interposed therebetween. Therefore, the profile of the reflective regions of the reflecting portion 12 is rotationally symmetric.

In the present embodiment, in the installed marker 10, the reflectance of each reflective region that reflects the light emitted from the respective LiDAR devices 20 toward the corresponding LiDAR devices is classified into three types of first reflectance to third reflectance different from each other. For example, the reflective lateral surface regions 121, 124 and the reflective upper surface regions 131, 134 have a first reflectance, the reflective lateral surface regions 122, 125 and the reflective upper surface regions 132, 135 have a second reflectance, and the reflective lateral surface regions 123, 126 and the reflective upper surface regions 133, 136 have a third reflectance. In this case, the reflectance profile of the reflecting portion 12 is rotationally symmetric by 180 degrees. In this example, the reflectance profile of the reflecting portion 12 is rotationally symmetric with respect to the central axis C of the pole portion 11.

For example, the reflective lateral surface regions 121, 124 and the reflective upper surface regions 131, 134 have the first reflectance similarly to the above, the reflective lateral surface regions 122, 126 and the reflective upper surface regions 132, 136 have the second reflectance slightly different from the above, and the reflective lateral surface regions 123, 125 and the reflective upper surface regions 133, 135 have the third reflectance slightly different from the above. In this case, the reflective region profile of the reflecting portion 12 is rotationally symmetric, but the reflectance profile is rotationally asymmetric. Furthermore, for example, as in the reflective lateral surface region 121 and the reflective upper surface region 131, the reflectance of the reflective lateral surface region and the reflectance of the reflective upper surface region adjacent to each other with the edge between the lateral surface 120 and the upper surface 130 interposed therebetween may be different from each other. As in these examples, since the reflecting portion 12 includes at least three types of reflective regions having different reflectances from each other, more various reflectance profiles can be realized as compared with a case where the reflecting portion 12 includes reflective regions of two types of reflectances, and in a case where the LiDAR device 20 generates data related to the orientation of the marker 10 as described later, data related to a more accurate orientation can be generated.

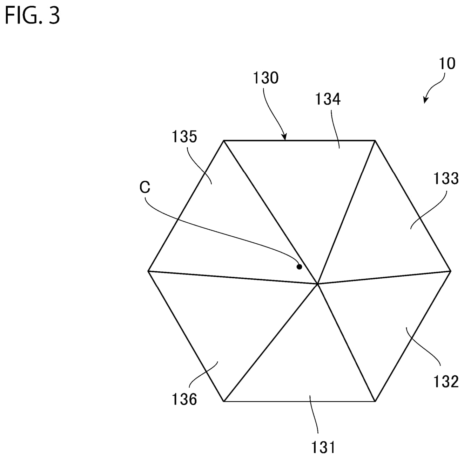

FIG. 3 is a diagram of a first modification of the marker 10 as viewed from above. As illustrated in FIG. 3, in the present modification, the profile of the reflective upper surface regions 131 to 136 of the upper surface 130 in the reflecting portion 12 is rotationally asymmetric. In this modification, the shapes of the respective reflective upper surface regions 131 to 136 are rotationally asymmetric. As described above, since the profile of the reflective regions of the reflecting portion 12 is rotationally asymmetric, the intensity profile of the light reflected by the reflecting portion 12 becomes unique regardless of the direction in which the LiDAR device 20 is installed with respect to the marker 10, and the relative positional relationship between the marker 10 and the LiDAR device 20 can be uniquely determined. Note that, in this modification, the outer shape of the reflecting portion 12 is rotationally symmetric, specifically, rotationally symmetric with respect to the central axis C.

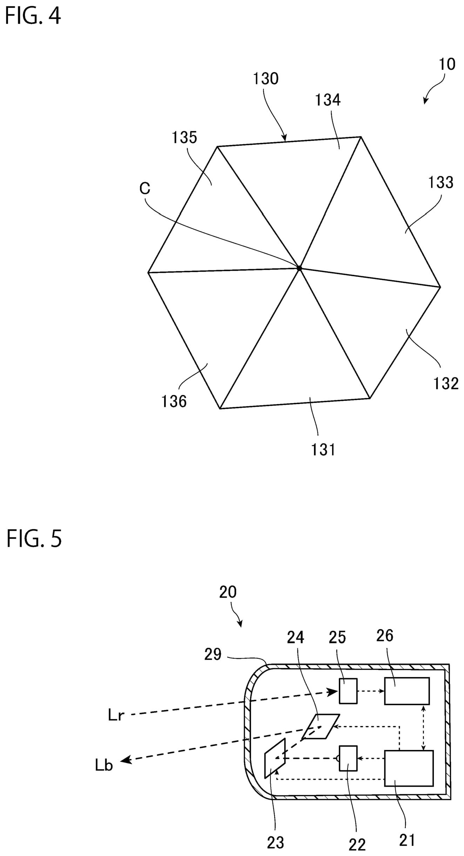

FIG. 4 is a diagram of a second modification of the marker 10 as viewed from above. As illustrated in FIG. 4, in this modification, the outer shape of the reflecting portion 12 is rotationally asymmetric. As described above, since the outer shape of the reflecting portion 12 is rotationally asymmetric, the profile of the reflective upper surface regions 131 to 136 of the upper surface 130 is also rotationally asymmetric. As described above, since the outer shape of the reflecting portion 12 is rotationally asymmetric, the intensity profile of the light reflected by the reflecting portion 12 becomes unique regardless of the direction in which the LiDAR device 20 is installed with respect to the marker 10, and the relative positional relationship between the marker 10 and the LiDAR device 20 can be uniquely determined.

In the reflective regions having different reflectances for reflecting the light emitted from the respective LiDAR devices 20 toward the corresponding LiDAR devices 20, a difference in reflectance may be provided by making the materials of the surfaces different from each other or making the surface roughness different from each other. Furthermore, a difference in reflectance may be provided by forming the surfaces of some reflective regions into retroreflective structure. Examples of the case where the materials of the surface of the reflective regions are made different include, for example, dividing the reflective regions into a reflective region in which coating using carbon as a pigment is applied to the surface, a reflective region in which coating using titanium oxide as a pigment is applied to the surface, and a reflective region in which coating using aluminum as a pigment is applied to the surface. In addition, even in the case of the same pigment, the reflectance may be made different depending on the particle size. In addition, examples of the case where the surface roughness is made different from each other include, for example, dividing the reflective regions into a reflective region having a very high smoothness and a reflective region having a roughened surface by sandblasting or the like. Furthermore, in the case of the retroreflective structure, bead retroreflective structure or pyramid retroreflective structure may be used.

Note that the laser light emitted from each LiDAR device 20 is reflected by at least two reflective regions having different reflectances from each other of the marker 10. That is, the marker 10 has a size sufficient to reflect laser light. Furthermore, in a case where the laser light is emitted from the LiDAR device 20, the marker 10 preferably has a size to allow, in each of the reflective regions irradiated with the laser light, a plurality of portions to be irradiated with the laser light.

Next, the LiDAR device 20 will be described.

FIG. 5 is a schematic diagram of the LiDAR device 20. The respective LiDAR devices 20 of FIG. 1 of the present embodiment have similar configurations to each other. The LiDAR device 20 detects an object located in the detection region AR using the laser light as described above. Examples of the object include a fixed object such as a road surface or a building, and a moving object such as a vehicle or a person. With this detection, the LiDAR device 20 can detect, for example, a gradient of a road surface or a shape of a building, and can detect movement of a vehicle, a person, or the like. As the LiDAR device 20 of the present embodiment, for example, a raster scan LiDAR device is used. The LiDAR device 20 includes, as main components, a cover 29, a driver circuit 21 housed inside the cover 29, a laser light source 22, an H-direction scanning driving mirror 23, a V-direction scanning driving mirror 24, a light receiving element 25, and a point cloud data generation unit 26. Note that, the LiDAR device 20 in the example of FIG. 2 is a mechanical LiDAR device, but may be a phased array LiDAR device that does not include a drive unit described later (not illustrated).

The cover 29 has a housing space that houses the driver circuit 21, the laser light source 22, the H-direction scanning driving mirror 23, the V-direction scanning driving mirror 24, the light receiving element 25, and the point cloud data generation unit 26, and transmits laser light Lb emitted from the laser light source 22 and reflected light Lr that is the laser light Lb reflected by the object in the detection region AR.

The driver circuit 21 includes, for example, a plurality of logic circuits, and is electrically connected to the laser light source 22, the H-direction scanning driving mirror 23, and the V-direction scanning driving mirror 24 to control them.

The laser light source 22 emits the laser light Lb having a predetermined wavelength. The laser light Lb is, for example, near-infrared light having a wavelength of 905 nm or 1550 nm. The timing at which the laser light source 22 emits the laser light Lb is controlled by the driver circuit 21, and the laser light Lb is emitted by a signal from the driver circuit 21. The driver circuit 21 is electrically connected to the point cloud data generation unit 26, and outputs data including the timing of the laser light to be emitted from the laser light source 22 to the point cloud data generation unit 26.

The H-direction scanning driving mirror 23 includes a mirror that reflects the laser light Lb emitted from the laser light source 22, and a driving unit (not illustrated) controlled by the driver circuit 21. When reflecting the laser light Lb, the H-direction scanning driving mirror 23 reflects the laser light Lb while changing the reflection angle in the horizontal direction by the driving unit. By changing the reflection angle of the H-direction scanning driving mirror 23, the LiDAR device 20 performs horizontal scanning.

The V-direction scanning driving mirror 24 includes a mirror that reflects the laser light Lb that has been reflected by the H-direction scanning driving mirror 23, and a driving unit (not illustrated) controlled by the driver circuit 21. When reflecting the laser light Lb, the V-direction scanning driving mirror 24 reflects the laser light Lb while changing the reflection angle in the vertical direction by the driving unit. By changing the reflection angle of the V-direction scanning driving mirror 24, the position of horizontal scanning performed by the LiDAR device 20 is changed in the vertical direction. The laser light reflected by the V-direction scanning driving mirror 24 transmits through the cover 29 and irradiates the front of the vehicle.

The H-direction scanning driving mirror 23 and the V-direction scanning driving mirror 24 include, for example, a polygon mirror or a galvano mirror. Furthermore, each of the H-direction scanning driving mirror 23 and the V-direction scanning driving mirror 24 may include a MEMS mirror. Furthermore, the H-direction scanning driving mirror 23 and the V-direction scanning driving mirror 24 may be integrated into a biaxial scanning type mirror, and the order of reflecting the laser light Lb by the H-direction scanning driving mirror 23 and the V-direction scanning driving mirror 24 may be reversed.

The light receiving element 25 is an element that receives the reflected light Lr of the laser light Lb reflected by the object in the detection region AR. The reflected light Lr received by the light receiving element 25 includes information regarding an object located in the detection region AR. The light receiving element 25 outputs a signal that changes according to the intensity of the received light. The light receiving element 25 is electrically connected to the point cloud data generation unit 26, and the information is input to the point cloud data generation unit 26 as an electrical signal.

Based on the data on the emission timing of the laser light Lb input from the driver circuit 21, the information input from the light receiving element 25, and the data on the timing at which the information is input from the light receiving element 25, the point cloud data generation unit 26 generates point data for each reflection position based on the direction of the reflection position at which the laser light Lb is reflected, the distance to the reflection position, and the intensity of the light received by the light receiving element 25. The point data includes information regarding the coordinates of the point and the intensity of light reflected at the position to be the point data. Therefore, the point cloud data generation unit 26 generates point cloud data that is a collection of pieces of point data. The point cloud data generation unit 26 is electrically connected to the processor 30, and the point cloud data is input to the processor 30.

As described above, since the marker 10 is installed in the overlapping region OL, the marker 10 is detected by each LiDAR device 20. Therefore, the point cloud data output from each LiDAR device 20 includes point cloud data indicating the coordinates of the marker 10.

The processor 30 includes, for example, an integrated circuit such as a microcontroller, an integrated circuit (IC), a large-scale integrated circuit (LSI), or an application specific integrated circuit (ASIC), or a numerical control (NC) device. In addition, the processor 30 may use a machine learning device or may not use a machine learning device. The processor 30 controls integration of the pieces of point cloud data output from the respective LiDAR devices 20, operation of the LiDAR devices 20, and the like. The processor 30 includes a control unit 31, a calculation unit 32, an integration unit 33, and an output unit 34. The control unit 31, the calculation unit 32, the integration unit 33, and the output unit 34 are electrically connected by a bus line. In addition, the processor 30 is electrically connected to a memory 40.

The memory 40 is configured to store data related to the refractive index profile of the marker 10 and to be able to read the data. The memory 40 is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except for a transitory propagating signal, and does not exclude a volatile recording medium. Note that the memory 40 may be provided in one package together with the processor 30.

The control unit 31 controls each LiDAR device 20. For example, the control unit 31 controls the timing at which each LiDAR device 20 detects an object in the detection region AR. At this time, the control unit 31 may instruct the driver circuit 21 the timing at which the LiDAR device 20 detects the inside of the detection region AR for one frame. In this case, the driver circuit 21 instructs the laser light Lb to be emitted or the like so as to start detection for one frame at the timing received from the control unit 31. The control unit 31 also controls the operations of the calculation unit 32, the integration unit 33, and the output unit 34.

The calculation unit 32 is a part that calculates the position and orientation of the marker 10 in the pieces of point cloud data output from the respective LiDAR devices 20. The calculation unit 32 compares the information regarding the reflectance profile of the marker 10 stored in the memory 40 with the information regarding the intensity profile of the reflected light Lr based on the information regarding the intensity of the reflected light Lr of respective pieces of point data in the respective pieces of point cloud data. As described above, the marker 10 has a size to allow at least two reflective regions having different reflectances from each other to reflect the laser light Lb emitted from each LiDAR device 20. Therefore, the plurality of pieces of point data is data based on light reflected by at least two reflective regions. By this comparison, the coordinates of the marker 10 in each piece of point cloud data are specified. In addition, the calculation unit 32 specifies the orientation of the marker 10. In a case where this orientation is a predetermined direction, the predetermined direction is, for example, a direction determined in advance. For example, in a case where the direction from the reflective upper surface region 132 toward the reflective upper surface region 135 along the in-plane direction of the upper surface 130 of the marker 10 is set as the predetermined direction, the calculation unit 32 specifies the position of the marker 10 in each piece of point cloud data as described above, and specifies the predetermined direction of the marker 10. The position of the marker 10 is specified by, for example, x, y, and z coordinates in each piece of point cloud data. In addition, the predetermined direction is specified by, for example, a roll angle, a pitch angle, and a yaw angle with respect to x, y, and z coordinates in each piece of point cloud data.

Note that, in a case where the refractive index profile of the marker 10 is rotationally symmetric, the most appropriate orientation is selected so that the orientations of the marker 10 in the pieces of point cloud data output from the respective LiDAR devices 20 are not the same. This selection may be performed using machine learning, or may be performed based on a predetermined algorithm. For example, as illustrated in FIG. 1, it is assumed that two LiDAR devices 20 are located on opposite sides with respect to the marker 10, and the reflectance profile of the marker 10 is rotationally symmetric by 180 degrees. In this case, if the predetermined direction of the marker 10 coincides with the x-axis direction in the point cloud data of one LiDAR device 20, the other LiDAR device 20 selects the -x-axis direction from the x-axis direction and the -x-axis direction so that the position for itself does not overlap with the position for one LiDAR device 20. The data calculated by the calculation unit 32 is output to the integration unit 33.

The integration unit 33 integrates the pieces of point cloud data output from the respective LiDAR devices 20 with reference to a plurality of pieces of point data indicating the marker 10. At this time, the pieces of point cloud data are integrated such that the positions and orientations of the marker 10 from the respective LiDAR devices 20 coincide with each other in the coordinate system of the integrated data. That is, in the integrated data, the respective piece of point cloud data output from the respective LiDAR devices 20 is indicated by one coordinate system. The data integrated by the integration unit 33 is output to the output unit 34.

The output unit 34 is a part that outputs the integrated point cloud data from the processor 30. The output unit 34 outputs, for example, the integrated point cloud data to a monitor 50.

The monitor 50 displays the integrated point cloud data output from the output unit 34. Note that the monitor 50 is not an essential component of the LiDAR system 1.

Next, the operation of the processor 30 of the present embodiment will be described.

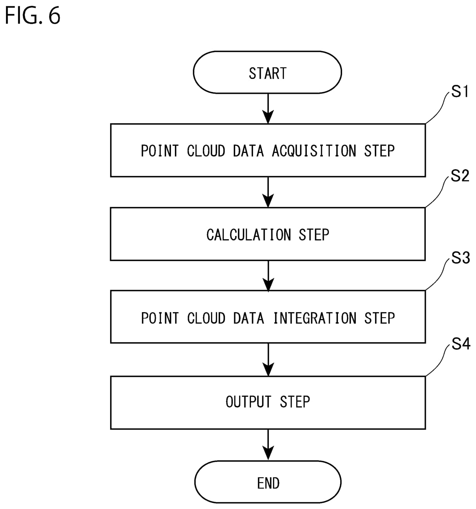

FIG. 6 is a flowchart illustrating an operation of the processor 30. As illustrated in FIG. 6, the operation of the processor 30 includes steps S1 to S4.

### (Step S1)

This step is a point cloud data acquisition step of acquiring pieces of point cloud data from the respective LiDAR devices 20. In this step, the control unit 31 of the processor 30 outputs a signal serving as a trigger to the driver circuit 21 of each LiDAR device 20. When receiving the signal, the driver circuit 21 operates the laser light source 22, the H-direction scanning driving mirror 23, and the V-direction scanning driving mirror 24 so as to perform detection for one frame. At this time, every time the laser light is emitted from the laser light source 22, the H-direction scanning driving mirror 23 is driven to be slightly inclined, and every time the laser light is emitted from the laser light source 22 a predetermined number of times, the V-direction scanning driving mirror 24 is operated to be slightly inclined, and is operated to return the inclination of the H-direction scanning driving mirror 23 to a state before the laser light is emitted from the laser light source 22 a predetermined number of times. The light receiving element 25 outputs a signal corresponding to the intensity of the received reflected light Lr, and, based on the signal and the signal from the driver circuit 21, the point cloud data generation unit 26 generates data related to the coordinates of each point constituting the point cloud data and the intensity of the reflected light Lr. The point cloud data is generated by collecting the pieces of point data. The generated point cloud data is output to the processor 30. In this way, the processor 30 acquires the point cloud data from each LiDAR device 20. In order to prevent the reflected light Lr of the laser light Lb emitted from one LiDAR device 20 from being used for generating the point cloud data of the other LiDAR device 20, it is preferable that the emission timings of the laser light from the respective LiDAR devices 20 do not overlap each other. For example, it is preferable that the respective LiDAR devices 20 be controlled to alternately generate point cloud data for one frame. Furthermore, making the wavelengths of the laser light Lb of the respective LiDAR devices 20 different from each other may allow each LiDAR device 20 to receive and process the reflected light Lr of the laser light Lb emitted by itself, and not to process the reflected light Lr of the laser light Lb emitted by the other LiDAR device 20.

### (Step S2)

This step is a calculation step of calculating the position and orientation of the marker 10 from each piece of point cloud data. In this step, each piece of point cloud data input in step S1 is input to the calculation unit 32. The calculation unit 32 reads data related to the reflectance profile of the marker 10 from the memory 40. Then, as described above, the calculation unit 32 compares the information regarding the reflectance profile of the marker 10 with the information regarding the intensity profile of the reflected light Lr in each piece of the point cloud data, and specifies the coordinates of the marker 10 and the orientation of the marker 10 in each piece of the point cloud data. Information regarding the specified coordinates and orientation of the marker 10 in each piece of the point cloud data is output to the integration unit 33.

### (Step S3)

This step is a point cloud data integration step of integrating the respective pieces of point cloud data into common coordinates with reference to the coordinates and the orientation of the marker 10. In this step, on the basis of the information from the calculation unit 32, the integration unit 33 integrates the respective pieces of point cloud data into one coordinate system such that the positions and orientations of the marker 10 included in the pieces of point cloud data from the respective LiDAR devices 20 coincide with each other in the integrated data. In this way, the pieces of point cloud data output from the respective LiDAR devices 20 are integrated. The integrated point cloud data is output to the output unit 34.

### (Step S4)

This step is an output step of outputting the integrated point cloud data. The output unit 34 outputs the point cloud data integrated by the integration unit 33. The output point cloud data is displayed on the monitor 50. The output point cloud data may also be output to a processing unit other than the monitor 50. The processing unit other than the monitor 50 performs predetermined processing on the basis of the point cloud data. After this step, the processor 30 ends this flowchart. Note that the processor 30 may return the flowchart to step S1.

As described above, the marker 10 of the present embodiment is a marker detectable by a plurality of LiDAR devices 20, and includes the pole portion 11 and the reflecting portion 12 provided at one end of the pole portion 11 and having a plurality of reflective regions having different reflectances for reflecting light emitted from the respective LiDAR devices 20 toward the corresponding LiDAR devices 20. In the present embodiment, the plurality of reflective regions are the reflective lateral surface regions 121 to 126 and the reflective upper surface regions 131 to 136.

Furthermore, the LiDAR system 1 of the present embodiment includes: at least two LiDAR devices 20 having respective detection regions AR partially overlapping each other; the marker 10 disposed in the overlapping region OL in which the respective detection regions AR overlap each other; and the processor 30 that integrates the pieces of point cloud data output from the respective LiDAR devices 20 with reference to a plurality of pieces of point data indicating the marker 10, wherein the marker 10 includes the pole portion 11 and the reflecting portion 12 provided at one end of the pole portion 11 and having a plurality of reflective regions having different reflectances for reflecting the light emitted from the respective LiDAR devices 20 toward the corresponding LiDAR devices 20, and the plurality of pieces of point data are data based on the light reflected by the at least two reflective regions.

Since the marker 10 includes the pole portion 11 and the reflecting portion 12 is provided at one end of the pole portion 11, by installing the marker 10 so as to erect the pole portion 11, it is possible to suppress the irradiation of the plurality of reflective regions with the laser light from the LiDAR devices 20 from being obstructed by an obstacle disposed on the ground or the floor as compared with a case where the reflective regions are disposed along the ground or the floor. Therefore, the marker 10 of the present embodiment is easily detected by the LiDAR devices 20. Furthermore, since the reflecting portion 12 has the above-described plurality of reflective regions having different reflectances, the light reflected by the reflective regions having different reflectances is incident on the LiDAR device 20 as light having different intensities. Therefore, the LiDAR device 20 can generate data related to the position and orientation of the marker 10 on the basis of the intensity profile of the incident light. The respective LiDAR devices 20 create pieces of data related to a common marker, so that the pieces of point cloud data output from the respective LiDAR devices 20 can be integrated on the basis of the data. That is, the marker 10 of the present embodiment can be a marker serving as a reference when the pieces of point cloud data of the plurality of LiDAR devices 20 are integrated.

Although the present invention has been described by taking the above-described embodiment as an example, the present invention is not limited thereto.

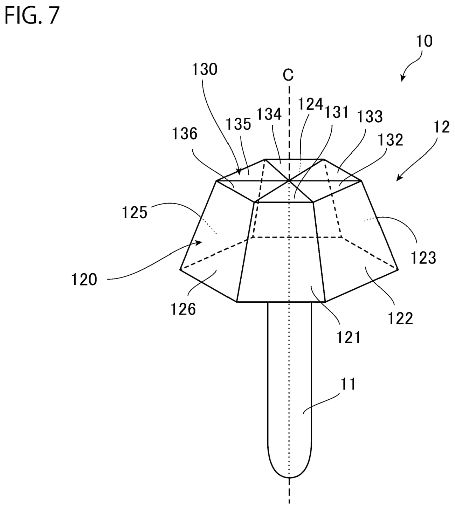

For example, the shape and reflectance profile of the marker 10 are not limited to those in the above embodiment. FIG. 7 is a schematic diagram of a third modification of the marker 10. The marker 10 illustrated in FIG. 7 is different from that of the above embodiment in that the surface direction of each lateral surface 120 of the reflecting portion 12 is directed upward relative to the horizontal direction. Therefore, the surface direction of each of the reflective lateral surface regions 121 to 126 is directed upward relative to the horizontal direction. Therefore, the lateral surfaces 120 of the reflecting portion 12 of this modification are not parallel to the radial direction of the pole portion 11. The LiDAR device 20 used for infrastructure facilities in a town or the like is generally provided at a high position. As in this modification, when the surface direction of the lateral surface 120 is directed upward relative to the horizontal direction, the lateral surface 120 can be directed to the LiDAR 20 side. Therefore, the reflectance of the laser light Lb from the LiDAR device 20 can be increased, and extraction of a plurality of pieces of point data indicating the marker 10 from the point cloud data can be facilitated.

Note that, in the LiDAR system 1, the at least two LiDAR devices 20 are preferably installed such that the respective laser light Lb emitted from the respective LiDAR devices 20 is applied to the at least two common reflective lateral surface regions. For example, one LiDAR device 20 is installed at a position where the continuously adjacent reflective lateral surface regions 121 to 123 are irradiated with the laser light Lb, and the other LiDAR device 20 is installed at a position where the continuously adjacent reflective lateral surface regions 122 to 124 are irradiated with the laser light Lb. In this case, the positions where the LiDAR devices 20 are installed are different from the positions where the pair of LiDAR devices 20 in FIG. 1 is installed.

In the above embodiment, each of the reflective lateral surface regions 121 to 126 and the reflective upper surface regions 131 to 136 is classified into three types of reflective regions. However, the reflective lateral surface regions 121 to 126 and the reflective upper surface regions 131 to 136 may be classified into two types of reflective regions having the above-described reflectances, or may be classified into four or more types of reflective regions.

Furthermore, the marker 10 has the reflective lateral surface regions 121 to 126 and the reflective upper surface regions 131 to 136, but may not have one of the reflective lateral surface regions 121 to 126 and the reflective upper surface regions 131 to 136 as long as the reflecting portion 12 of the marker 10 is indicated by a plurality of pieces of point cloud data by the LiDAR devices 20. However, in a case where a plurality of reflective regions are provided on the planar upper surface 130, it is preferable to provide a plurality of reflective regions on the upper surface 130 in order to uniformly receive light from the LiDAR devices 20.

In the above embodiment, the example has been described in which the size of the reflecting portion 12 along the radial direction of the pole portion 11 is larger than the size of the pole portion 11 along the radial direction. However, the size of the reflecting portion 12 along the radial direction of the pole portion 11 may be equal to or smaller than the size of the pole portion 11 along the radial direction. For example, one end surface of the pole portion 11 may be the reflecting portion 12.

In the above embodiment, the example in which the reflecting portion 12 has a hexagonal columnar shape has been described, but the number of the planar lateral surfaces 120 may be three to five or eight or more. However, in order to prevent the size of the lateral surfaces 120 from becoming too small, the number of lateral surfaces 120 is preferably 10 or less, more preferably eight or less, and still more preferably six or less. In addition, in order to cause the LiDAR device 20 to detect many lateral surfaces 120, the number of lateral surfaces is preferably five or more, and more preferably six or more. Therefore, the number of lateral surfaces is most preferably six.

In addition, the memory 40 may store a plurality of relationships between the orientation of the marker 10 and the intensity profile of the reflected light in advance, and in step S2, the calculation unit 32 may compare the intensity profile of the plurality of lights with the intensity profile of the light in the point cloud data acquired in step S1, and calculate the orientation of the marker 10 corresponding to the intensity profile in the memory 40 closest to the intensity profile of the light acquired in step S1 as the orientation of the marker 10.

According to the present invention, a marker and a LiDAR system that are easily detected by LiDAR devices can be provided, and are available in the field of monitoring an object.

## Claims

1. A marker detectable by a plurality of LiDAR devices, the marker comprising:
a pole portion; and
a reflecting portion provided at one end of the pole portion and having a plurality of reflective regions having different reflectances for reflecting light emitted from the respective LiDAR devices toward the corresponding LiDAR devices.

2. The marker according to claim 1, wherein
the reflecting portion includes at least three types of reflective regions having the reflectances different from each other.

3. The marker according to claim 1, wherein
a size of the reflecting portion along a radial direction of the pole portion is larger than a size of the pole portion along the radial direction.

4. The marker according to claim 1, wherein
a profile of the reflective regions of the reflecting portion is rotationally asymmetric.

5. The marker according to claim 1, wherein
the reflecting portion has a shape having a plurality of planar lateral surfaces non-parallel to a radial direction of the pole portion, and
the lateral surfaces adjacent to each other are reflective regions having the reflectances different from each other.

6. The marker according to claim 5, wherein
a surface direction of each of the planar lateral surfaces is along the radial direction.

7. The marker according to claim 5, wherein
a surface direction of each of the planar lateral surfaces is directed toward the one end of the pole portion from the other end of the pole portion rather than the radial direction.

8. The marker according to claim 5, wherein
the number of the planar lateral surfaces is six.

9. The marker according to claim 1, wherein
a surface of the reflecting portion on an opposite side to a side of the pole portion is planar, and
the plurality of reflective regions are provided on the planar surface.

10. A LiDAR system comprising:
at least two LiDAR devices having respective detection regions partially overlapping each other;
a marker disposed in an overlapping region in which the respective detection regions overlap each other; and
a processor that integrates pieces of point cloud data output from the respective LiDAR devices with reference to a plurality of pieces of point data indicating the marker,
wherein the marker includes a pole portion and a reflecting portion provided at one end of the pole portion and having a plurality of reflective regions having different reflectances for reflecting light emitted from the respective LiDAR devices toward the corresponding LiDAR devices, and
the plurality of pieces of point data are data based on the light reflected by the at least two reflective regions.
